(19) Europäisches Patentamt
European Patent Office
Office européen des brevets

(11) EP 1 895 332 A2

(12) **EUROPEAN PATENT APPLICATION**

(43) Date of publication:
05.03.2008 Bulletin 2008/10

(51) Int Cl.:
*G02B 1/00* (2006.01)

(21) Application number: 07114928.0

(22) Date of filing: 24.08.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 28.08.2006 JP 2006230251
13.11.2006 JP 2006306324

(71) Applicant: Sumitomo Chemical Company, Limited
Tokyo 104-8260 (JP)

(72) Inventors:
• **Hamamatsu, Toyohiro**
**Niihama-shi Ehime (JP)**
• **Sakamoto, Takashi**
**Niihama-shi Ehime (JP)**
• **Sato, Tomohiro**
**Niihama-shi Ehime (JP)**

(74) Representative: **Vossius & Partner**
**Siebertstrasse 4**
**81675 München (DE)**

(54) **Light Diffusing Plate**

(57) The present invention provides a light diffusing plate (1) which is lightweight and is less likely to be damaged, and is not deformed by moisture absorption and heat from the light source.

The light diffusing plate (1) of the present invention comprises a propylene polymer having a propylene unit content of 98% by mass or more and a light diffusing agent dispersed in the polypropylene polymer. The light diffusing plate (1) of the present invention is used in a backlight device (4) comprising a light source (5) disposed on the back side of the light diffusing plate. This backlight device (4) is used in a liquid crystal display device (2) comprising a liquid crystal cell (3), the light diffusing plate (1) being located between the liquid crystal cell (3) and the light source (5).

**Description**

The present invention relates to a light diffusing plate, and particularly to a light diffusing plate used in a state of being properly installed in a backlight device which constitutes a direct liquid crystal display device.

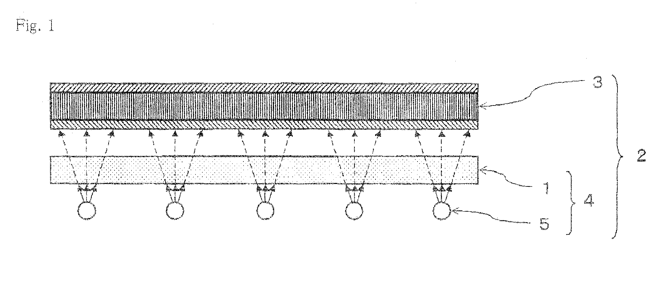

A direct liquid crystal display device (2) is a display device comprising a liquid crystal cell (3) and a backlight device (4) disposed just under the liquid crystal cell, as shown in Fig. 1, and a backlight device comprising a light diffusing plate (1) and a light source (5) such as cold cathode ray tube disposed on the back side of the light diffusing plate is widely used as the backlight device (4) [Patent Document 1: Japanese Unexamined Patent Publication (Kokai) No. 2004-170937].

It is required that the light diffusing plate (1) is lightweight and is less likely to be damaged, and is not deformed by moisture absorption and heat from the light source.

The present inventors have intensively studied so as to develop a light diffusing plate which is lightweight and is less likely to be damaged, and is not deformed by moisture absorption and heat, and thus the present invention has been completed.

Namely, the present invention provides a light diffusing plate (1) comprising a propylene polymer having a propylene unit content of 98% by mass or more and a light diffusing agent dispersed in the polypropylene polymer.

The light diffusing plate of the present inversion is lightweight because a light diffusing agent is dispersed in a propylene polymer and is less likely to be damaged because of its excellent mechanical strength, and is not deformed by moisture absorption and heat from the light source because of its excellent moisture resistance and heat resistance.

Fig. 1 is a sectional view schematically showing an example of a direct liquid crystal display device and a backlight device.

[Description of Reference Numerals]

1:   Light diffusing plate
2:   Direct liquid crystal display device
3:   Liquid crystal cell
4:   Backlight device
5:   Light source (Cold cathode ray tube)

The propylene polymer constituting the light diffusing plate (1) of the present invention has a propylene unit content of 98% by mass or more, and may be a homopropylene obtained by polymerizing propylene alone, or may be a copolymer of propylene and a copolymerization component capable of copolymerizing with propylene. A copolymerization component includes, for example, an $\alpha$-olefin such as 1-butene.

The light diffusing agent may be composed of particles having a refractive index which is different from that of the propylene polymer, and can diffuse light transmitted through the light diffusing plate (1). For example, the light diffusing agent may be composed of inorganic particles such as inorganic glass particles, glass fiber, silica particles, aluminum hydroxide particles, calcium carbonate particles, barium sulfate particles, titanium oxide particles and talc, or may be composed of organic particles such as styrene-based polymer particles, acryl-based polymer particles and siloxane-based polymer particles.

A particle size of the light diffusing agent is usually 0.5 $\mu$m or more, and preferably 0.7 $\mu$m or more, in terms of a diameter, while the particle size is usually 25 $\mu$m or less, preferably 20 $\mu$m or less, and more preferably 10 $\mu$m or less.

The content of the light diffusing agent in the light diffusing plate (1) of the present invention is usually from 0.1 to 20 parts by mass based on 100 parts by mass of the propylene polymer.

The light diffusing plate (1) of the present invention may contain additives such as nucleating agents, ultraviolet absorbers, heat stabilizers, antioxidants, weather resisting agents, photostabilizers, fluorescent whitening agents and processing stabilizers in the propylene polymer.

It is possible to use, as the nucleating agent, those having compatibility with the propylene polymer, such as a sorbitol-based nucleating agent, organophosphate-based nucleating agent, metal salt nucleating agent of carboxylic acid, and rosin-based nucleating agent.

Examples of the sorbitol-based nucleating agent include dibenzylidene sorbitol, 1.3,2.4-di(methylbenzylidene) sorbitol, 1.3,2.4-di(ethylbenzylidene)sorbitol, 1.3,2.4-di(butylbenzylidene)sorbitol, 1.3,2.4-di(methoxybenzylidene)sorbitol, 1.3,2.4-di(ethoxybenzylidene)sorbitol, 1.3-chlorobenzylidene-2.4-methylbenzylydene sorbitol, mono(methyl)dibenzylidene sorbitol and 1,3:2,4-bis-O-(3,4-dimethylbenzylidene)-D-sorbitol. Examples of a commercially available product include "Millad3988" available from Milliken Co., "NC-4" available from Mitsui Chemicals, Inc. and "Gel All-MD" available from New Japan Chemical Co., Ltd.

Examples of the organophosphate-based nucleating agent include sodium bis (4-t-butylphenyl)phosphate, lithium bis (4-t-butylphenyl) phosphate, aluminum bis(4-t-butylphenyl) phosphate, sodium 2,2'-methylene-bis(4,6-di-t-butylpheryl) phosphate, lithium 2,2'-methylene-bis (4,6-di-t-butylphenyl)phosphate, aluminum 2,2'-methylene-bis(4,6-di-t-butylphenyl)phosphate, calcium 2,2'-methylene-bis (4, 6-di-t-butylphenyl)phosphate, sodium 2,2'-ethylene-bis(4,6-di-t-butylphenyl)phosphate, lithium 2,2'-ethylene-bis(4,6-di-t-butylphenyl)phosphate, aluminum 2,2'-ethylene-bis(4,6-di-t-butylphenyl)phosphate and calcium bis (4-t-butylphenyl)phosphate. Examples of a commercially available product include "ADK STAB NA-11-" and "ADK STAB NA-21" manufactured by ASAHI DENKA CO., LTD.

Examples of the metal salt nucleating agent of carboxylic acid include aluminum benzoate, potassium benzoate, sodium benzoate, lithium benzoate, aluminum di-para-t-butylbenzoate, titanium di-para-t-butylbenzoate, chromium di-para-t-butylbenzoate, aluminum hydroxy-di-t-butylbenzoate, aluminum-p-t-butylbenzoate, sodium β-naphthoate, sodium cyclohexanecarboxylate, sodium cyclopentanecarboxylate, aluminum adipate, sodium sebacate, potassium sebacate and aluminum sebacate. Examples of a commercially available product include "AL-PTBBA" available from Japan Chemtech Ltd.

Examples of the rosin-based nucleating agent include rosin acid metal salt and examples of the rosin acid metal salt include sodium rosinate, potassium rosinate, calcium rosinate and magnesium rosinate. Examples or a commercially available product include "Pinecrystal KM-1300", "Pinecrystal KM-1500" and "Pinecrystal KR-50M" manufactured by Arakawa Chemical Industries, Ltd.

The amount of the nucleating agent to be added is usually from 0.05 to 1.0 parts by mass based on 100 parts by mass of the propylene polymer.

The thickness of the light diffusing plate (1) of the present invention is usually from 1 to 3 mm. The size of the light diffusing plate (1) of the present invention is appropriately selected according to the objective backlight device (4) and direct liquid crystal display device (2). The light diffusing plate is suited for comparatively large size TV which is 20-inch size (30 cm in lengthy 40 cm in width) or larger-inch size.

The light diffusing plate (1) of the present invention can be produced, for example, by a conventional molding method such as an extrusion molding method of melt-kneading a propylene polymer with a light diffusing agent and extruding the melt-kneaded mixture, an injection molding method of performing injection molding, or an hot pressing method of performing hot pressing.

Even if a light diffusing agent having no nucleating effect or a small amount of a light diffusing agent having a nucleating effect is used, when the light diffusing plate (1) of the present invention is produced by means of extrusion molding process, a light diffusing plate (1) having no white spots on the surface can be easily produced by melt- kneading a polypropylene polymer and a light diffusing agent together with a nucleating agent , and agent, and extruding the melt-kneaded mixture.

Examples of the light diffusing agent having no nucleating effect include organic particles such as styrene-based polymer particles, acryl-based polymer particles and siloxane-based polymer particles, and inorganic particles such as inorganic glass particles, glass fiber, silica particles, aluminum hydroxide particles, calcium carbonate particles, barium sulfate particles, titanium oxide particles and talc.

The light diffusing plate (1) of the present invention can also be used after laminating a surface layer on one or both surfaces. Since the surface of the light diffusing plate (1) of the present invention exhibits comparatively high surface hardness, the light diffusing plate is less likely to be scratched even when used without laminating the surface layer.

The light diffusing plate (1) of the present invention is preferably used as a light diffusing plate (1) which constitutes a backlight device (4) as shown in Fig. 1 because the light diffusing plate is less likely to be deformed by moisture absorption and heat. The backlight device (4) shown in Fig. 1 is equipped with a light diffusing plate (1) and a light source (5). The light source (5) is disposed on the back side of the light diffusing plate (1). A cold cathode ray tube is conventionally used as the light source (5).

As the backlight device (4), for example, a direct liquid crystal display device (2) as shown in Fig. 1 is preferably used. This direct liquid crystal display device (2) is equipped with the backlight device (4) and a liquid crystal cell (3). The liquid crystal cell (3) can display a color image, preferably. In this direct liquid crystal display device (2), a light diffusing plate (1) is located between the liquid crystal cell (3) and the light source (5). By using the light diffusing plate (1) of the present invention as the light diffusing plate (1), the light diffusing plate (1) is not deformed by heat generation even if the light source (5) is turned on.

Examples

The present invention will now be described in more detail by way of Examples, but the present invention is not limited thereto.

Evaluation procedures in the respective Examples are as follows.

(1) Entire light transmittance, Diffusing light transmittance, Haze

An entire light transmittance was measured in accordance with JIS K 7361, and a diffusing light transmittance and haze were measured in accordance with JIS K 7136.

(2) Spectral transmittance (Yellowness YI, Chromaticity x and Chromaticity y)

From a spectral transmittance at a wavelength within a range from 380 to 780 nm measured using a self-spectrophotometer equipped with an integrating sphere ["UV-4000" manufactured by Hitachi, Ltd.], yellowness YI, chromaticity x and chromaticity y were determined.

(3) Water absorption percentage

A water absorption percentage 1 and a water absorption percentage 2 were determined by the following two methods.

(3-1) Water absorption percentage 1

The resulting light diffusing plate was cut to obtain a sample measuring 150 mm x 150 mm and the sample was dried in an oven at 80°C for 4 days, and then the mass was measured to obtain a dry mass ($W_0$). Then, the sample was allowed to stand in a thermo-hygrostat at 60°C x 95RH% for 4 days and the mass was immediately measured and was taken as $W_1$. A water absorption percentage 1 was calculated from the equation (1).

$$\text{Water absorption percentage 1} = [(W_1 - W_0)/W_0] \times 100\% \quad (1)$$

(3-2) Water absorption percentage 2

A sample obtained by cutting in the same manner as that described above was dried in the same manner and a dry mass ($W_0$) was measured. After immersing in water at 23°C for 24 hours, the mass was immediately measured and was taken as $W_2$. A water absorption percentage 2 was calculated from the equation (2).

$$\text{Water absorption percentage 2} = [(W_2 - W_0)/W_0] \times 100\% \quad (2)$$

(4) Heating gravitational deflection test

The resulting light diffusing plate was cut so that an extrusion direction (MD direction) corresponds to a long side (150 mm) and the direction which is perpendicular to the extrusion direction (TD direction) corresponds to a short side to obtain a strip-shaped sample measuring 150 mm x 25 mm. On end of this sample was horizontally fixed to the position which is within 20 mm from one end, while the other end was freely unfixed. After controlling an atmospheric temperature to 90 or 95°C, a difference of elevation between one end and the other end was measured after 2, 4, 24, 48 and 72 hours.

(5) Measurement of pencil hardness

A pencil hardness was measured in accordance with JIS K 5600.

(6) Tensile test

A tensile breaking strength was measured in accordance with JIS K 7113.

(7) Bending test

A bending stiffness was measured in accordance with JIS K 7203.

(8) Deflection temperature under load

With respect to a light diffusing plate immediately after extruding and a light diffusing plate subjected to an annealing treatment at 80°C for 16 hours, each deflection temperature under load was measured in accordance with JIS K 7207.

(9) Vicat softening point (VSP)

With respect to a light diffusing plate immediately after extruding and a light diffusing plate subjected to an annealing treatment at 80°C for 16 hours, each Vicat softening point was measured in accordance with JIS K 7206.

(10) Presence or absence of white spots

With respect to the resulting light diffusing plate, the presence or absence of white spots was confirmed by visually observing the surface.

Example 1

100 Parts by mass of a commercially available propylene-ethylene copolymer ["D101" manufactured by Sumitomo Chemical Co., Ltd., propylene unit content: 99% by mass or more, ethylene unit content: 1% by mass or less] and 2.2 parts by mass of a light diffusing agent [cyclohexane-based polymer particles "DY33-719" manufactured by Dow Corning Toray Co., Ltd.] were dry-blended, supplied to an extruder having a screw diameter of 40 mm and melt-kneaded at a temperature of 210 to 250°C, and then the melt-kneaded mixture was extruded through a feed block and T-die at a T-die temperature of 245 to 260°C to obtain a light diffusing plate measuring 2 mm in thickness and about 220 mm in width. On the surface of this light diffusing plate, a lot of white spots each having a diameter of 0.5 mm were observed. The evaluation results of this light diffusing plate are shown in Table 1.

Example 2

The same operation as in Example 1 was carried out, except that 100 parts by mass of the same polypropylene resin [D101] as that used in Example 1, 2.2 parts of the same light diffusing agent [DY33-719] as that used in Example 1, and 0.3 parts by mass of a nucleating agent ["Mikllad 3988" manufactured by Milliken Co., 1,3:2,4-bis-O-(3,4-dimethylbenzylidene)-D-sorbitol] were dry-blended, a light diffusing plate was obtained. On the surface of this light diffusing plate, white spots were not visually observed. The evaluation results are shown in Table 1.

Comparative Example 1

The same operation as - in Example 1 was carried out, except that 100 parts by mass of a commercially available propylene-ethylene copolymer ["S131" manufactured by Sumitomo Chemical Co., Ltd. , propylene unit content: 96% by mass, ethylene unit content: 4% by mass] was used in place of the polypropylene resin [D101] used in Example 1, a light diffusing plate was obtained. On the surface of this light diffusing plate, a lot of white spots each having a diameter of 0.5 mm were observed. The evaluation results are shown in Table 1.

Table 1

|  | Example 1 | Example 2 | Com. Example 1 |
|---|---|---|---|
| Propylene polymer (Parts by mass) | 100 | 100 | 100 |
| Propylene unit (Parts by mass) | ≥99 | ≥99 | 96 |
| Light diffusing agent (Parts by mass) | 2.2 | 2.2 | 2.2 |
| Nucleating agent (Parts by mass) | 0 | 0.3 | 0 |
| Entire light transmittance (%) | 53.9 | 57.3 | 56.9 |
| Diffusing light transmittance (%) | 53.4 | 56.9 | 56.4 |
| Haze (%) | 99.1 | 99.3 | 99.1 |
| Yellowness YI | 1.28 | 0.25 | 1.30 |
| Chromaticity x | 0.3112 | 0.3102 | 0.3114 |
| Chromaticity | 0.3168 | 0.3159 | 0.3165 |

(continued)

| | Example 1 | Example 2 | Com. Example 1 |
|---|---|---|---|
| Water absorption percentage 1 (%) | 0.005 | 0.003 | 0.006 |
| Water absorption percentage 2 (%) | 0.007 | 0.006 | 0.011 |
| Heating gravitational deflection test (mm) | | | |
| 90°C initial (0 hour) | 0.0 | 0.0 | 0.0 |
| After 2 hours | 2.9 | 2.4 | 4.4 |
| After 4 hours | 3.1 | 2.5 | 4.5 |
| After 24 hours | 3.4 | 2.6 | 4.6 |
| After 48 hours | 3.5 | 2.6 | 4.7 |
| After 78 hours | 3.5 | 2.6 | 4.7 |
| 95°C initial (0 hour) | 0.0 | 0.0 | 00 |
| After 2 hours | 3.1 | 2,4 | 5.0 |
| After 4 hours | 3.2 | 2.5 | 5.0 |
| After 24 hours | 3.5 | 2.5 | 5.1 |
| After 48 hours | 3.6 | 2,6 | 5.1 |
| After 78 hours | 3.7 | 2.6 | 5.1 |
| Pencil hardness | B | B | less than 5B |
| Tensile breaking strength (MPa) | 2906 | 3295 | 1666 |
| Bending stiffness (MPa) | 1589 | 1894 | 677 |
| Deflection temperature under load (°C) | | | |
| Before annealing treatment | 70 | 73 | 53 |
| After annealing treatment | 81 | 76 | 58 |
| Vicat, softening point (°C) | | | |
| Before annealing treatment | 156 | 155 | 113 |
| After annealing treatment (at 80°C or 16 hr) | 156 | 154 | 114 |
| White spots | observed | not observed | observed |

The major embodiments and the preferred embodiments of the present invention are listed below.

[1] A light diffusing plate comprising a propylene polymer having a propylene unit content of 98% by mass or more and a light diffusing agent dispersed in the polypropylene polymer.

[2] The light diffusing plate according to [1], wherein the propylene polymer contains a nucleating agent.

[3] A backlight device comprising the light diffusing plate according to [1] or [2] and a light source disposed on the back side of the light diffusing plate.

[4] A direct liquid crystal display device comprising the backlight device according to [3] and a liquid crystal cell, the light diffusing plate being located between the liquid crystal cell and the light source.

[5] A method for producing a light diffusing plate according to [1], which comprises melt-kneading the propylene polymer and a light diffusing agent and extruding the resulting melt-kneaded mixture.

[6] The method according to [5], wherein the propylene polymer and a 1 diffusing agent are melt-kneaded together with a nucleating agent and then the resulting melt-kneaded mixture is extruded.

**Claims**

1. A light diffusing plate comprising a propylene polymer having a propylene unit content of 98% by mass or more and a light diffusing agent dispersed in the polypropylene polymer.

2. The light diffusing plate according to claim 1, wherein the propylene polymer contains a nucleating agent.

3. A backlight device comprising the light diffusing plate according to claim 1 or 2 and a light source disposed on the back side of the light diffusing plate.

4. A direct liquid crystal display device comprising the backlight device according to claim 3 and a liquid crystal cell, the light diffusing plate being located between the liquid crystal cell and the light source.

5. A method for producing a light diffusing plate according to claim 1, which comprises melt-kneading the propylene polymer and a light diffusing 9 agent and extruding the resulting melt-kneaded mixture.

6. The method according to claim 5, wherein the propylene polymer and a light diffusing agent are melt-kneaded together with a nucleating agent and then the resulting melt-kneaded mixture is extruded.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004170937 A